# DEMANDE DE BREVET EUROPEEN

(11) **EP 1 764 213 A1**
(43) Date de publication de la demande: **21.03.2007**
(21) Numéro de dépôt: 05020040.1
(22) Date de dépôt: 14.09.2005
(51) Int. Cl.: B32B 27/10, B32B 3/04, B65D 5/42, B31F 7/00, B29C 65/00

(54) **Matériau d'emballage, flan et récipient pour liquide et procédés pour leur fabrication**

(71) Demandeur: BOBST S.A., 1001 Lausanne (CH)
(72) Inventeur: Borel, Edouard, 1041 Dommartin (CH)
(74) Mandataire: Poirier, Jean-Michel Serge

(57) **Abrégé**

Le matériau d'emballage stratifié selon l'invention comprend successivement, entre une face externe (15) et une face interne (16), au moins une première couche extérieure (10) d'une matière thermoplastique, une couche de support (20), une couche intérieure (30) en matière thermoplastique, une couche barrière (40) et une seconde couche extérieure (50) en matière thermoplastique, telles que toutes les couches sont scellées entre-elles sauf dans une zone sélectionnée (4) où la liaison entre ladite couche intérieure (30) en matière thermoplastique et ladite couche barrière (40) est interrompue.
Domaine d'application : fabrication d'emballages hermétiques pour produits liquides, en particulier alimentaires.

## Description

### Domaine technique

La présente invention concerne un matériau d'emballage multicouche ou stratifié destiné à la confection d'au moins un flan propre à la constitution d'un récipient de liquide formé à partir d'une découpe ou bande dudit matériau d'emballage stratifié, comprenant successivement, entre une face externe et une face interne, au moins une première couche extérieure de revêtement en matière thermoplastique notamment thermocollante, une couche de support réalisée en une matière relativement rigide tel que par exemple du carton, une couche intérieure en matière thermoplastique notamment thermocollante, une couche barrière formant barrière aux gaz et à la lumière et une seconde couche extérieure en matière thermoplastique notamment thermocollante, et un procédé de fabrication d'un tel matériau.

L'invention concerne également un flan propre à la constitution d'un récipient de liquide formé à partir d'une découpe ou bande d'un matériau d'emballage stratifié comprenant successivement, entre une face externe et une face interne, au moins une première couche extérieure de revêtement en matière thermoplastique notamment thermocollante, une couche de support réalisée en une matière relativement rigide tel que par exemple du carton, une couche intérieure en matière thermoplastique notamment thermocollante, une couche barrière formant barrière aux gaz et à la lumière et une seconde couche extérieure en matière thermoplastique notamment thermocollante, et un procédé de fabrication d'un tel flan.

L'invention concerne enfin un récipient de liquide pour emballer hermétiquement des liquides en particulier alimentaires comme par exemple du lait ou du jus, réalisé à partir d'au moins un tel flan conformé en tube à bords longitudinaux chevauchants et scellés l'un sur l'autre de façon étanche aux fluides, et un procédé de fabrication d'un tel récipient.

### Etat de la technique

Dans ce type d'emballage connu, voir par exemple la demande de brevet européen EP 0006259 A, le bord de la bande se trouvant dans la zone de chevauchement des bords à l'intérieur de l'emballage, est exposé à l'humidité par le produit liquide contenu dans ledit emballage. Le chant ou arête de la couche de support en carton est donc directement en contact avec le liquide de sorte que cette couche en carton gonfle petit à petit, ce qui conduit, à terme, à la destruction locale du scellement des deux bords superposés et ainsi à la destruction de l'étanchéité de l'emballage. De plus, dans certains cas, le liquide contenu dans ledit emballage peut être pollué par des impuretés provenant du carton, ce qui n'est pas acceptable notamment quand le liquide est alimentaire.

Il a déjà été proposé de recouvrir la zone de chevauchement des deux bords longitudinaux de la bande du côté intérieur de l'emballage par un ruban de scellement de façon à empêcher le liquide de venir en contact avec le chant nu de la couche en carton, ce ruban de scellement en matière thermoplastique adhérant de façon étanche sur la face interne de l'emballage et plus précisément sur la face interne du bord longitudinal intérieur, d'une part, et sur la face interne d'une zone de bande immédiatement voisine du bord extérieur couvrant le bord intérieur de façon à laisser subsister un canal longitudinal entre le chant du bord intérieur et la zone voisine du bord extérieur de la bande d'emballage conformée en tube.

La manipulation de ce ruban de scellement à l'intérieur du tube à bords longitudinaux chevauchants est compliquée de même que l'application de ce ruban contre la face interne de l'emballage. En outre, le moindre défaut d'étanchéité dans ce ruban de scellement rend toute la couche en carton accessible à l'humidité du produit emballé.

Pour empêcher l'infiltration des fibres du carton par l'humidité du produit emballé, il a également été proposé de protéger le chant nu de la couche en carton en dolant le bord longitudinal intérieur de la bande, voir par exemple les demandes de brevet européen EP 0557351 A et EP 0112085 A. Par doler, on entend l'enlèvement d'une partie de la matière de l'emballage sur une épaisseur donnée pour former une patte de protection qui est ensuite repliée, soit sur elle-même de manière que les surfaces dolées soient en contact mutuel comme illustré dans EP 0557351 A, soit autour du chant nu comme illustré dans EP 0112085 A. Le dolage permet, in fine, au bord protégé par la patte de protection repliée d'avoir une épaisseur sensiblement égale à celle de la bande.

Dans l'état de la technique, le dolage est obtenu par usinage de la bande, comme par exemple dans EP 0112085 A où la bande est fraisée. L'inconvénient d'usiner une bande, outre le temps d'usinage qui peut être long, est la production de poussière qui est nuisible à la propreté de la bande et donc à l'hygiène alimentaire. En effet, la bande découpée pouvant servir à la constitution d'un récipient de liquide alimentaire, la présence de particules de poussière à l'intérieur de ce récipient est prohibée. Il faut donc impérativement s'assurer que la bande est exempte d'impuretés notamment sur sa face interne, face délimitant l'intérieur du récipient.

### Divulgation de l'invention

Un but de la présente invention est de remédier aux inconvénients précités en proposant un matériau d'emballage stratifié qui permet de réaliser un dolage propre au moyen d'un procédé rapide.

Ce but est atteint grâce au fait que toutes les couches du matériau d'emballage stratifié sont scellées entre-elles sauf dans une zone sélectionnée où la liaison entre la couche intérieure en matière thermoplastique et la couche barrière est interrompue.

Dans la présente invention, on utilise le terme "scellé" dans un sens générique, englobant le scellage thermique ou mécanique de surfaces recouvertes par un vernis thermofusible par exemple, ainsi que le scellage par l'intermédiaire d'une colle liquide ou pâteuse déposée sur les surfaces à assembler, ou encore tout autre solution de liaison de deux surfaces connue dans l'état de la technique.

Grâce à cette conception, il n'est plus nécessaire d'usiner la bande pour la doler, une simple incision au droit de la ou des lignes démarquant ladite zone sélectionnée suffit pour séparer une partie sélectionnée de la matière de l'emballage du reste de la bande.

D'autres objets et avantages de l'invention apparaîtront plus clairement au cours de la description de modes de réalisation, description qui va être faite en se référant aux dessins annexés.

### Brève description des dessins

La figure 1 est une vue partielle en coupe transversale d'une bande d'un matériau d'emballage selon l'invention, cette vue montre aussi une patte de protection selon l'invention.

La figure 2 est une vue en plan d'un flan selon l'invention.

La figure 3 est une vue partielle en coupe transversale analogue à celle de la figure 1, après repliement de la patte de protection.

La figure 4 est une vue partielle en perspective d'une coupe transversale à travers un emballage fermé réalisé à partir du flan de la figure 3, cette vue montre plus particulièrement la zone de chevauchement des deux bords longitudinaux du flan.

### Meilleur mode de réalisation de l'invention

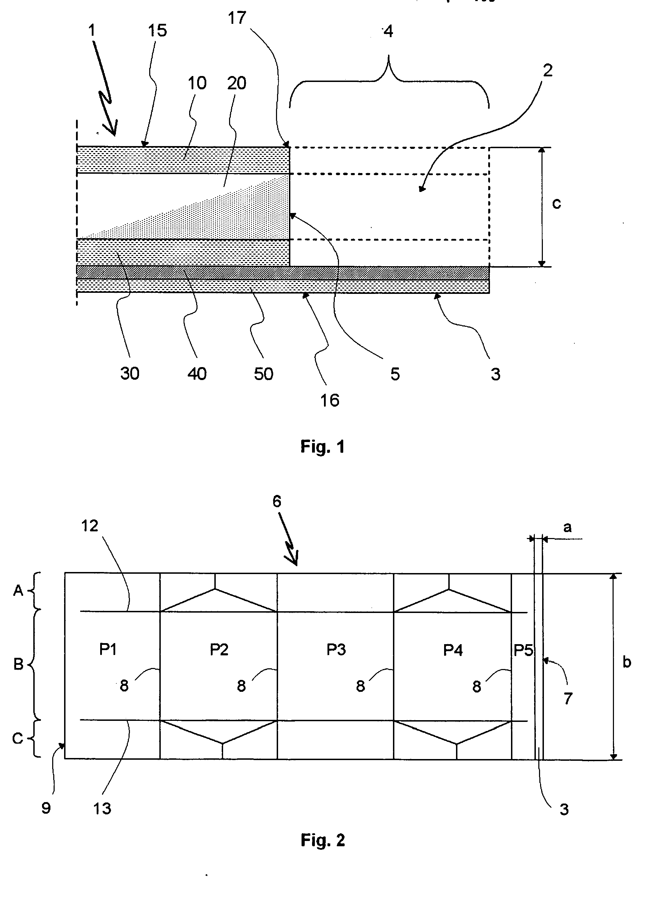

En référence à la figure 1, le matériau d'emballage stratifié faisant l'objet de la présente description comprend, successivement, entre une face externe 15 et une face interne 16, une mince couche de revêtement 10, désignée par "première couche extérieure", en matière thermoplastique thermocollante tel que du polyéthylène, une couche de support 20 réalisée en une matière relativement rigide mais pliable tel que du carton, une couche barrière 40 étanche notamment aux gaz et à la lumière telle qu'une feuille métallique, par exemple d'aluminium, scellée à ladite couche de support 20 par une couche de liaison thermoplastique thermocollante 30 désignée par "couche intérieure" et, enfin, une couche interne 50, désignée par "seconde couche extérieure", en matière thermoplastique thermocollante tel que du polyéthylène. Les traits interrompus de la figure 1 montre le matériau d'emballage stratifié sans dolage.

L'objet de l'invention ne concernant pas la composition du matériau d'emballage stratifié, celle-ci n'est pas limitée à celle qui vient d'être décrite à titre d'exemple.

Le scellage des couches successives se fait, par exemple, par extrusion à chaud des couches thermoplastiques (la couche intérieure 30 et les couches extérieures 10, 50) et thermocollage sur les couches non thermoplastiques (la couche de support 20 et la couche barrière 40).

Avantageusement, les couches thermoplastiques sont extrudées séparément et jointes simultanément aux couches non thermoplastiques après leur extrusion, lorsqu'elles sont encore chaudes.

Selon l'invention, toutes les couches sont scellées entre-elles sauf dans une zone sélectionnée 4 où la couche intérieure 30 n'est pas thermocollée sur la couche barrière 40.

Pour empêcher le thermocollage de la couche intérieure 30 sur la couche barrière 40, on applique par des moyens connus, comme par exemple par encollage, enduction ou pulvérisation, un produit anti-adhésif tel que du polytétrafluoroéthylène (PTFE ou Téflon®) sur la surface de la couche barrière 40 tournée vers la couche intérieure 30.

De préférence, le produit anti-adhésif est appliqué après l'extrusion des couches thermoplastiques et avant de joindre lesdites couches thermoplastiques aux couches non thermoplastiques.

En variante, le produit anti-adhésif peut se présenter sous forme d'un ruban pris en sandwich entre la couche barrière 40 et la couche intérieure 30.

L'étendue de la surface recouverte par le produit anti-adhésif ou par le ruban anti-adhésif définit ladite zone sélectionnée 4 en délimitant une zone où l'adhésion de surface entre la couche intérieure 30 et la couche barrière 40 est plus faible que l'adhésion de surface des couches scellées.

De préférence, l'adhésion de surface entre la couche intérieure 30 et la couche barrière 40 est nulle ou quasiment nulle dans ladite zone sélectionnée 4.

Un autre objet de l'invention concerne un flan formé avantageusement à partir d'une découpe ou bande d'un matériau d'emballage stratifié tel que décrit précédemment.

Sur la figure 2 est représentée un flan 6 à partir duquel un récipient de liquide peut être fabriqué. Dans l'exemple, le flan 6 comporte entre ses deux bords libres longitudinaux 9 et 7 respectivement quatre panneaux de paroi latérale P1 à P4 et un panneau de jonction latérale P5, les cinq panneaux adjacents pouvant être pliés suivant quatre lignes de pliage longitudinales 8 pour former un tube à section rectangulaire. Chaque panneau est divisé par des lignes de pliage transversales 12 et 13 en une section de fermeture supérieure A, en une section de corps B et en une section de fermeture de fond C. La section supérieure A constitue la partie à partir de laquelle sera formée la fermeture supérieure du récipient terminé, la section de corps B constitue la partie à partir de laquelle les parois latérales verticales du récipient seront formées, tandis que la section de fond C constitue la partie à partir de laquelle le fond du récipient sera formé.

Le matériau d'emballage stratifié utilisé pour former le flan 6 comprend successivement entre une face externe 15 et une face interne 16, une première couche extérieure 10, une couche de support 20, une couche intérieure 30, une couche barrière 40 et une seconde couche extérieure 50. Toutes les couches sont scellées entre-elles sauf le long du bord longitudinal 7 où l'adhésion (de surface) entre la couche intérieure 30 et la couche barrière 40 est nulle ou quasiment nulle. Cette zone sans adhésion s'étend longitudinalement sur toute la longueur 'b' du bord longitudinal 7 du panneau de jonction latérale P5, et, latéralement sur une largeur 'a'.

Avant de plier et sceller le flan 6 pour constituer ultérieurement un récipient de liquide, le flan 6 est dolé sur son bord intérieur, ici le bord longitudinal 7. Pour ce faire, le flan selon l'invention est incisé sur sa face externe 15 au droit d'une ligne 17, parallèle au bord longitudinal 7 et distant de 'a' dudit bord 7. L'incision est pratiquée sur toute la longueur 'b' du bord 7 et sur une profondeur 'c' égaie à l'épaisseur des trois couches superposées 10, 20 et 30 (voir figure 1).

En variante, l'incision peut être inclinée, c'est-à-dire que la direction d'incision peut former un angle non nul avec le plan parallèle au bord longitudinal 7 et passant par la ligne 17.

Avantageusement, l'incision est réalisée par un couteau pouvant être porté par une platine (non représenté).

En variante, l'incision peut être réalisé par un disque rotatif ou par un faisceau laser (non représenté). Dans le cas d'un faisceau laser, il est avantageux d'utiliser la couche barrière 40 comme déflecteur de faisceau.

Grâce au fait que la zone délimitée par 'a' et 'b' coïncide avec une zone où l'adhésion entre la couche intérieure 30 et la couche barrière 40 est nulle ou quasiment nulle, l'incision pratiquée a pour effet de libérer du flan 6 une partie 2 du matériau d'emballage stratifié comprenant les trois couches superposées 10, 20 et 30. Dans l'exemple, la partie 2 a la forme générale d'un parallélépipède rectangle de dimensions a, b et c.

Après sa libération, la partie 2 est retirée du flan 6 par un outil de dégagement (non représenté) de façon à laisser subsister une patte de protection 3 formée d'une matière stratifiée comprenant les couches barrière 40 et extérieure 50. On obtient ainsi une patte de protection exempte de poussière du fait qu'il n'y a pas d'enlèvement de matière au cours d'une opération d'incision, contrairement au fraisage et aux autres techniques d'usinage qui produisent des copeaux et/ou de la poussière.

Dans le cas particulier où l'incision est réalisée par un couteau, il est avantageux d'utiliser ledit couteau aussi comme outil de dégagement de la partie 2.

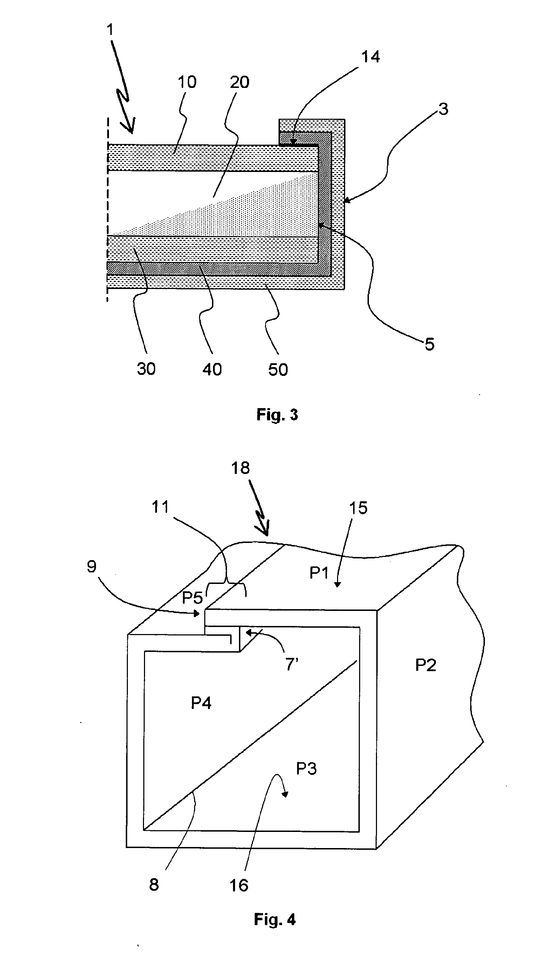

Après le retrait de la partie 2, une arête longitudinale 5 apparaît sur le flan 6 à la distance 'a' du bord 7 (voir figure 1). Afin de protéger le bord intérieur du flan 6, la valeur de 'a' est choisie suffisante pour pouvoir, après repliement de la patte 3 vers la face externe 15 du flan 6, recouvrir ladite arête longitudinale 5 et une zone marginale 14 de la face externe 15 adjacente à l'arête 5 (voir figure 3), zone marginale 14 contre laquelle s'appliquera ultérieurement de façon étanche et par scellage le bord extérieur du flan 6 (voir figure 4).

D'une façon générale, on désigne par "bord intérieur" le bord libre longitudinal d'un flan 6 dont la face externe 15 est partiellement recouverte par la patte de protection 3 et qui se trouve à l'intérieur de l'emballage formé ultérieurement par pliage et scellage dudit flan, et on désigne par "bord extérieur" le bord libre longitudinal du flan qui ne comporte pas de patte de protection et qui se trouve sur le côté extérieur de l'emballage.

Un autre objet de l'invention concerne un emballage, en particulier un récipient de liquide formé avantageusement par pliage et scellage d'au moins un flan tel que décrit précédemment.

En référence à la figure 4, l'emballage fermé 18 faisant l'objet de la présente description possède une face interne, notamment stérile, et se présente sous la forme générale d'un tube à section rectangulaire. Cet emballage est réalisé à partir d'au moins un flan 6 selon l'invention dont les bords libres longitudinaux 7 et 9 se chevauchent dans une zone de chevauchement 11 et sont scellés l'un à l'autre de façon étanche aux fluides.

Les procédés de fabrication de ce type d'emballage remplis au cours de leur fabrication étant largement connus, par exemple par le brevet européen EP 0302413 A, ils ne seront pas décrits ici.

Dans l'emballage fini 18 réalisé à partir du flan 6 conformé en tube (voir figure 4), on désigne par 7' le bord intérieur du flan 6 protégé contre l'humidité. Pour réaliser le bord protégé 7', la patte de protection 3 est pliée vers la face externe 15 du bord 7 sur l'arête longitudinale 5, puis scellée sur ladite face externe 15 sur au moins une partie de la zone marginale 14. Dans l'exemple représenté, la patte 3 recouvre la face externe 15 sur une zone marginale 14 qui coïncide sensiblement avec la zone de chevauchement 11 dans laquelle le bord extérieur 9 est scellé sur la face externe 15 du bord intérieur 7.

De préférence, la patte de protection 3 recouvre la face externe 15 du bord intérieur 7 sur toute la zone marginale 14 recouverte par le bord extérieur 9 du flan 6 et est scellée, dans toute cette zone marginale 14, à la fois à la face externe 15 du bord intérieur 7 et à la face interne 16 du bord extérieur 9 du flan 6.

Avantageusement, le bord protégé 7' est formé avant que le tube ne soit fermé, c'est-à-dire avant que les bords intérieur 7 et extérieur 9 du flan 6 ne soient scellés l'un à l'autre de façon étanche.

Il est bien évident que l'invention n'est pas limitée à l'exemple de réalisation décrit et représenté ci-dessus et à partir duquel on pourra prévoir d'autre formes de réalisation, sans pour cela sortir du cadre de l'invention. Par exemple, bien qu'un produit ou un ruban anti-adhésif ait été mentionné pour empêcher le thermocollage de la couche intérieure sur la couche barrière, dans la zone sélectionnée, il est possible d'obtenir une interruption de liaison entre lesdites couches en modifiant au moins une des surfaces en vis-à-vis de ladite couche intérieure et de ladite couche barrière, ceci au moyen d'un traitement de surface qui peut être mécanique, chimique, ionique ou photonique.

## Revendications

1. Matériau d'emballage stratifié pour la confection d'au moins un flan propre à la constitution d'un récipient de liquide formé à partir d'une découpe (1) dudit matériau d'emballage stratifié, comprenant successivement, entre une face externe (15) et une face interne (16), au moins une première couche extérieure (10) d'une matière thermoplastique, une couche de support (20), une couche intérieure (30) en matière thermoplastique, une couche barrière (40) et une seconde couche extérieure (50) en matière thermoplastique, **caractérisé en ce que** toutes les couches sont scellées entre-elles sauf dans une zone sélectionnée (4) où la liaison entre ladite couche intérieure (30) en matière thermoplastique et ladite couche barrière (40) est interrompue.

2. Matériau d'emballage stratifié selon la revendication 1 dans lequel lesdites couches (10, 30, 50) en matière thermoplastique sont extrudées sur lesdites couches de support (20) et barrière (40).

3. Matériau d'emballage stratifié selon la revendication 1 ou 2 dans lequel ladite interruption de liaison est obtenue par encollage, enduction ou pulvérisation d'un produit anti-adhésif sur l'une au moins des surfaces en vis-à-vis de ladite couche intérieure (30) en matière thermoplastique et de ladite couche barrière (40) dans ladite zone sélectionnée (4).

4. Matériau d'emballage stratifié selon la revendication 1 ou 2 dans lequel ladite interruption de liaison est obtenue par interposition d'un ruban anti-adhésif entre ladite couche intérieure (30) en matière thermoplastique et ladite couche barrière (40) dans ladite zone sélectionnée (4).

5. Matériau d'emballage stratifié selon l'une des revendications 1 à 4 dans lequel chaque couche (10, 30, 50) en matière thermoplastique est constituée de polyéthylène.

6. Matériau d'emballage stratifié selon l'une des revendications 1 à 5 dans lequel la couche barrière (40) se compose d'aluminium, de préférence sous forme de feuille.

7. Flan propre à la constitution d'un récipient de liquide formé à partir d'une découpe (1) d'un matériau d'emballage stratifié comprenant successivement, entre une face externe (15) et une face interne (16), au moins une première couche extérieure (10) d'une matière thermoplastique, une couche de support (20), une couche intérieure (30) en matière thermoplastique, une couche barrière (40) et une seconde couche extérieure (50) en matière thermoplastique, **caractérisé en ce qu'**au moins un des bords (7, 9) dudit flan (6) présente, dans une zone sélectionnée (4), une patte de protection (3) constituée uniquement de ladite couche barrière (40) et de ladite seconde couche extérieure (50) en matière thermoplastique.

8. Flan propre à la constitution d'un récipient de liquide formé à partir d'une découpe (1) d'un matériau d'emballage stratifié défini selon l'une des revendications 1 à 6, **caractérisé en ce qu'**il comporte plusieurs panneaux adjacents (P1-P5) pouvant être pliés suivant des lignes de pliage longitudinales (8) pour former un tube polygonal, tel qu'au moins un des bords longitudinaux (7, 9) dudit flan (6) présente dans ladite zone sélectionnée (4) une patte de protection (3) formée d'une matière stratifiée comprenant ladite couche barrière (40) et ladite seconde couche extérieure (50) en matière thermoplastique.

9. Flan selon la revendication 8, **caractérisé en ce qu'**il comporte quatre panneaux de paroi latérale (P1-P4) et un panneau de jonction latérale (P5), chaque panneau étant divisé par des lignes de pliage transversales (12, 13) en une section de fermeture supérieure (A), en une section de corps (B) et en une section de fermeture de fond (C), ladite patte de protection (3) étant formée sur la longueur 'b' du bord longitudinal (7) dudit panneau de jonction latérale (P5) et sur une largeur 'a' suffisante pour pouvoir, après repliement de ladite patte de protection (3) vers la face externe (15) de ladite découpe (1), recouvrir une arête longitudinale (5) dudit flan (6) et une zone marginale (14) de ladite face externe (15) adjacente à ladite arête longitudinale (5).

10. Récipient de liquide pour emballer hermétiquement des liquides en particulier alimentaires comme par exemple du lait ou du jus, réalisé à partir d'au moins un flan défini selon l'une des revendications 7 à 9 conformé en tube à bords longitudinaux chevauchants et scellés l'un sur l'autre de façon étanche aux fluides, **caractérisé en ce que** dans la zone de chevauchement (11) des deux bords longitudinaux (7, 9) dudit flan (6), le bord longitudinal (7), dit bord intérieur, et situé à l'intérieur du récipient (18), est protégé contre l'humidité par la patte de protection (3) repliée sur la face externe (15) dudit bord (7).

11. Récipient de liquide selon la revendication 10, **caractérisé en ce que** ladite patte de protection (3) est scellée, dans toute la zone marginale (14), à la fois à la face externe (15) du bord intérieur (7) et à la face interne (16) du bord extérieur (9) du flan (6).

12. Procédé de fabrication d'un matériau d'emballage stratifié défini selon l'une des revendications 1 à 6, **caractérisé en ce que** lesdites couches (10, 30, 50) en matière thermoplastique sont extrudées puis thermocollées sur lesdites couches de support (20) et barrière (40) sauf ladite couche intérieure (30) en matière thermoplastique sur ladite couche barrière (40) dans ladite zone sélectionnée (4).

13. Procédé de fabrication d'un matériau d'emballage stratifié selon la revendication 12, **caractérisé en ce que** l'une au moins des surfaces en vis-à-vis de ladite couche intérieure (30) en matière thermoplastique et de ladite couche barrière (40) est encollée, enduite ou pulvérisée d'un produit anti-adhésif dans ladite zone sélectionnée (4).

14. Procédé de fabrication d'un matériau d'emballage stratifié selon la revendication 12, **caractérisé en ce qu'**un ruban anti-adhésif est interposé entre ladite couche intérieure (30) en matière thermoplastique et ladite couche barrière (40) dans ladite zone sélectionnée (4).

15. Procédé de fabrication d'un flan défini selon l'une des revendications 7 à 9, **caractérisé en ce que** ledit flan (6) est incisé au droit de la ou des lignes (17) délimitant ladite zone sélectionnée (4), et **en ce que** dans ladite zone sélectionné (4) délimitée, une partie (2) du matériau d'emballage stratifié comprenant ladite première couche extérieure (10) en matière thermoplastique, ladite couche de support (20) et ladite couche intérieure (30) en matière thermoplastique est retirée de'façon à laisser subsister une patte de protection (3) formée d'une matière stratifiée comprenant ladite couche barrière (40) et ladite seconde couche extérieure (50) en matière thermoplastique.

16. Procédé de fabrication d'un flan selon la revendication 15 dans lequel ladite opération d'incision permet à elle seule de libérer ladite partie (2) du flan (6).

17. Procédé de fabrication d'un flan selon la revendication 15 ou 16 dans lequel ladite incision est réalisée par un couteau pouvant être porté par une platine.

18. Procédé de fabrication d'un flan selon la revendication 15 ou 16 dans lequel ladite incision est réalisée par un disque rotatif ou par un faisceau laser.

19. Procédé de fabrication d'un récipient pour liquide défini selon la revendication 10 ou 11, dans lequel la patte de protection (3) est pliée vers la face externe (15) du bord (7) sur l'arête longitudinale (5), puis scellée sur ladite face externe (15) sur au moins une partie de la zone marginale (14) pour former un bord protégé (7').

20. Procédé de fabrication d'un récipient pour liquide selon la revendication 19, dans lequel le bord protégé (7') est formé avant que les bords intérieur (7) et extérieur (9) du flan (6) ne soient scellés l'un à l'autre de façon étanche aux fluides.
